(19) Europäisches Patentamt
European Patent Office
Office européen des brevets

(11) **EP 1 550 856 A2**

(12) **EUROPEAN PATENT APPLICATION**

(43) Date of publication:
**06.07.2005 Bulletin 2005/27**

(51) Int Cl.[7]: **G01N 21/55**, G01N 33/53, C12Q 1/68

(21) Application number: **04030830.6**

(22) Date of filing: **27.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **26.12.2003 JP 2003433809**

(71) Applicant: **Fuji Photo Film Co., Ltd**
**Kanagawa-ken (JP)**

(72) Inventors:
- **Naya, Masayuki**
  **Ashigarakami-gun, Kanagawa-ken (JP)**
- **Sasaki, Hirotomo**
  **Minamiashigara-shi, Kanagawa-ken (JP)**
- **Inaba, Tadashi**
  **Minamiashigara-shi, Kanagawa-ken (JP)**
- **Ezoe, Toshihide**
  **Minamiashigara-shi, Kanagawa-ken (JP)**

(74) Representative: **Klunker . Schmitt-Nilson . Hirsch**
**Winzererstrasse 106**
**80797 München (DE)**

(54) **Optical device for use in plasmon resonance**

(57) An optical device having a structure which contains a metallic layer (1) and enables excitation of plasmon resonance. In order to prevent oxidation of the metallic layer (1), the metallic layer (1) is covered with a film (2) made of a mercapto compound containing a benzene ring and/or a hetero ring, or a reductive compound containing a metal-binding group (4) which can be bound to the metal of which the metallic layer (1) is made.

**FIG.2**

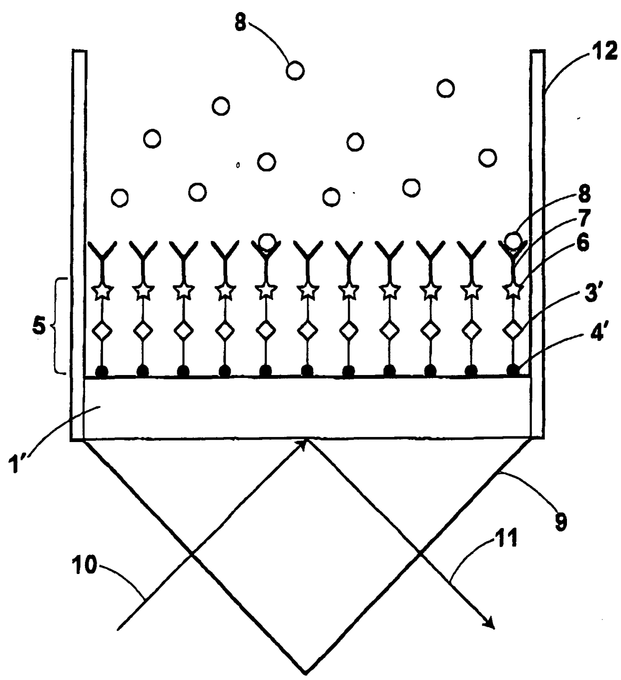


EP 1 550 856 A2

## Description

BACKGROUND OF THE INVENTION

Field of the Invention

The present invention relates to an optical device which utilizes a phenomenon related to plasmon resonance, for example, surface plasmon resonance or localized plasmon resonance. Such an optical device includes a measurement chip being arranged for use with a sensor and having a structure which can excite surface plasmon resonance or localized plasmon resonance. The present invention also relates to a surface-plasmon-resonance biosensor including a measurement chip having a structure which can excite surface plasmon resonance or localized plasmon resonance.

Description of the Related Art

In the fields of biochemistry and medical inspection, identification and analysis of materials are performed by utilizing surface plasmon resonance. U.S. Patent No. 5,917,607 discloses sensors being used in such identification or analysis and each having a structure in which a metal film is formed on a face of prism so as to excite surface plasmon resonance.

In addition, in recent years, sensors which utilize localized plasmon resonance have been proposed. Japanese Unexamined Patent Publication No. 2003-268592 discloses sensors using utilizing localized plasmon resonance and devices each having a surface structure in which minute metal particles are regularly arrayed so as to excite localized plasmon resonance.

It is known that the above sensors use devices having a metallic layer (such as a metal film or a layer on which minute metal particles are arrayed), and the characteristics of each device deteriorate due to oxidation of the metallic layer. Generally, it is possible to prevent oxidation of a metal film by covering the metal film with a material having an antioxidant function. However, since the above devices are provided for sensors each of which detects a change occurring in a material absorbed by a surface of the metallic layer, there is a possibility that the functions of the device for use with a sensor is impaired by formation of an antioxidant film on the metallic layer. Japanese Unexamined Patent Publication No. 5(1993)-017862 discloses a method for forming a thin nitride film on a metal film in a device for use with a sensor in order to prevent oxidation of the metal film and deterioration of the device without impairing the essential functions of the device. However, it is known that formation of such a thin film as not to impair the essential functions of a device for use with a sensor is not easy, and the sensitivity of a sensor is decreased by the provision of the thin film.

SUMMARY OF THE INVENTION

An object of the present invention is to provide an optical device being arranged for use with a sensor, having a structure which can excite plasmon resonance such as surface plasmon resonance or localized plasmon resonance, and exhibiting high performance and high durability, by forming a film of a material capable of preventing oxidation of a metallic layer without degradation of the performance of the optical device.

Another object of the present invention is to provide a surface-plasmon-resonance biosensor having a measurement chip which contains a metallic layer, and exhibiting high performance and high durability, by forming a film of a material capable of preventing oxidation of the metallic layer without degradation of the performance of the surface-plasmon-resonance biosensor.

According to the first aspect of the present invention, there is provided an optical device having a structure which enables excitation of plasmon resonance such as surface plasmon resonance or localized plasmon resonance. The optical device comprises: a metallic layer containing a constituent made of a metal; and an antioxidant film formed of a mercapto compound containing at least one of a benzene ring and a hetero ring, or a reductive compound containing a metal-binding group which can be bound to the metal, in such a manner that the antioxidant film covers the surface of the constituent.

Since the antioxidant film is made of the above compound, the function of being bound to the metal, which the mercapto group or the metal-binding group has, produces a structure in which single molecules of the compound are arrayed on the surface of the metal film. Therefore, it is possible to form a film which is so thin as not to affect the plasmon resonance such as surface plasmon resonance or localized plasmon resonance.

In addition, since the compound contains a benzene ring or a hetero ring, the benzene ring or the hetero ring blocks out the air. Further, when the compound is a reductive compound, oxygen existing around the surface of the optical device is reduced, and therefore the metal film is not exposed to oxygen. Thus, it is possible to effectively

prevent oxidation of the metal film and deterioration of the characteristics of the optical device.

In the case where the optical device is a sensor device used with a biosensor, it is preferable that the reductive compound or the mercapto compound is a compound containing a group which can be bound to a receptor of a specimen. In other words, when the reductive compound or the mercapto compound is a compound containing a group which can be bound to a receptor of a specimen, it is possible to obtain an optical device suitable for biosensing. Since the type of the receptor of each specimen is different, and the type of the group which can be bound to each receptor is different, it is preferable that the antioxidant film is formed of a compound which contains a group corresponding to the type of each specimen.

Further, it is preferable that the metal film is a silver film since silver is superior to the other metals in the optical characteristics. Since silver is more prone to oxidation than the other metals, conventionally it has been difficult to use silver for formation of the metal film. However, when the antioxidant film made of the reductive compound or the mercapto compound is used, it is possible to fully exploit the advantages of silver.

According to the second aspect of the present invention, there is provided a surface-plasmon-resonance biosensor having a measurement chip. The measurement chip comprises: a metallic layer containing a constituent made of a metal; and an antioxidant film formed of one of a mercapto compound containing at least one of a benzene ring and a hetero ring, and a reductive compound containing a metal-binding group which can be bound to the metal, in such a manner that the antioxidant film covers a surface of the constituent.

DESCRIPTION OF THE DRAWINGS

FIG. 1 is a schematic cross-sectional view illustrating an antioxidant film covering a surface of a metal film in an optical device according to an embodiment of the present invention.

FIG. 2 is a schematic cross-sectional view illustrating the operation of measurement by use of a measurement chip for a biosensor.

FIG. 3 is a graph provided for indicating the advantage of the present invention.

DESCRIPTION OF PREFERRED EMBODIMENTS

Embodiments of the present invention are explained in detail below with reference to the drawings.

Optical Devices

The present invention is applicable to any optical devices having a structure which enables excitation of surface plasmon resonance or localized plasmon resonance. Therefore, hereinbelow, some examples of structures which are known to enable excitation of surface plasmon resonance or localized plasmon resonance are indicated.

U.S. patent No. 5,917,607 and Japanese Unexamined Patent Publications Nos. 2002-357537 and 11(1999)-223597 disclose surface-plasmon-resonance sensors in which surface plasmon resonance is excited by using different structures.

In the structure for excitation of surface plasmon resonance disclosed in U.S. Patent No. 5, 917, 607, a metal film is formed on a prism. In a known structure similar to the structure disclosed in JPP 09-292332, a dielectric layer or an air layer is arranged between a prism and a metal film. In another known structure, a metal film is integrally formed with a dielectric block which has the function of a prism.

In the structure disclosed in JPP 2002-357537, a metal film is formed on a diffraction grating. In addition, JPP 11-223597 discloses an optical-fiber type surface-plasmon-resonance sensor in which a metal film is formed on a surface of a core of an optical fiber. That is, the optical devices having a structure which can excite surface plasmon resonance or localized plasmon resonance are not necessarily chip type devices. Therefore, the present invention is not limited to chip type optical devices, and can be applied to optical devices of any shape.

Further, Japanese Unexamined Patent Publication No. 2003-268592 discloses a biosensor which utilizes localized plasmon resonance and has a surface structure in which minute metal particles are regularly arranged for excitation of localized plasmon resonance.

On the other hand, in the fields other than the sensors, Japanese Unexamined Patent Publication No. 2000-292758 discloses a light modulation element utilizing surface plasmon resonance, and Japanese Unexamined Patent Publication No. 2000-314858 discloses an optical storage device and an optical processor which use the above light modulation element.

Furthermore, Japanese Unexamined Patent Publication No. 2000-173093 discloses an element which realizes high-density recording by utilizing surface plasmon resonance, and a structure for excitation of surface plasmon

resonance, in which a metal film is arranged at an end face of an optical waveguide.

That is, the present invention is not limited to optical devices for use with sensors, and can be applied to optical devices having any function.

As indicated above, various structures which can excite surface plasmon resonance or localized plasmon resonance are known. However, each of such structures includes a metallic layer (such as a metal film or a layer on which minute metal particles are arrayed), and the characteristics of each device deteriorate due to oxidation of the metallic layer. Hereinbelow, the antioxidant film which is formed so as to cover a metal film (as an example of the metallic layer) is explained in detail.

## Basic Structure

FIG. 1 is a schematic cross-sectional view illustrating an antioxidant film covering a surface of a metal film in an optical device according to an embodiment of the present invention. According to the present embodiment, a metal film 1 is made of silver (Ag), and a surface of the metal (silver) film 1 is covered with an antioxidant film 2 as illustrated in FIG. 1.

The antioxidant film 2 is made of a compound having a molecular structure which contains an antioxidant group 3 and a metal-binding group 4, where the antioxidant group 3 has an antioxidant function, and the metal-binding group 4 can be bound to metal. Specifically, the antioxidant film 2 is made of a mercapto compound containing a benzene ring or a hetero ring, or a reductive compound containing a metal-binding group which can be bound to the metal. Details of the above compounds are indicated below.

## Mercapto Compound

First, the mercapto compound is indicated in detail below. The mercapto compound of which the antioxidant film 2 can be made is expressed by the general formula,

$$Y'\text{-}SM, \qquad (1)$$

where Y' represents one of an alkyl group, an aryl group, and a heterocyclic group which have at least one benzene ring, at least one hetero ring, or both of at least one benzene ring and at least one hetero ring, S represents a sulfur atom, and M represents one of a hydrogen atom, a metal atom, and ammonium. In the above molecular structure, Y' has the function of the antioxidant group 3 (illustrated in FIG. 1) and SM has the function of the metal-binding group 4 which can be bound to metal (illustrated in FIG. 1).

Specifically, the alkyl group constituting the above molecule expressed by the general formula (1) is a linear, branched, or cyclic, alkyl group containing 1 to 30 carbon atoms, in which at least one substitution with at least one benzene ring or hetero ring is made. The aryl group is a monocyclic or condensed, substituted or unsubstituted, aromatic hydrocarbon ring such as a phenyl group and a naphthyl group. The heterocyclic group constituting the above molecule expressed by the general formula (1) is a monocyclic or condensed, substituted or unsubstituted, aromatic or nonaromatic, heterocyclic group containing at least one hetero atom.

For example, each substituent in the above mercapto compound is a halogen atom (a fluorine atom, a chlorine atom, a bromine atom, or an iodine atom), an alkyl group (a linear, branched, or cyclic, alkyl group such as a bicycloalkyl group or an active methine group), an alkenyl group, an alkynyl group, an aryl group, a heterocyclic group (irrespective of the position of the substitution), an acyl group, an alkoxycarbonyl group, an aryloxycarbonyl group, a heterocyclic oxycarbonyl group, a carbamoyl group, an N-hydroxycarbamoyl group, an N-acylcarbamoyl group, an N-sulfonylcarbamoyl group, an N-carbamoylcarbamoyl group, a thiocarbamoyl group, an N-sulfamoylcarbamoyl group, a carbazoyl group, a carboxy group or a salt of a carboxy group, an oxalyl group, an oxamoyl group, a cyano group, a carbonimidoyl group, a formyl group, a hydroxy group, an alkoxy group (including a group which contains a repetition of a unit comprised of an ethyleneoxy group or a propyleneoxy group), an aryloxy group, a heterocyclic oxy group, an acyloxy group, a carbonyloxy (alkoxy or aryloxy) group, a carbamoyloxy group, a sulfonyloxy group, an amino group, an (alkyl, aryl, or heterocyclic) amino group, an acylamino group, a sulfonamide group, an ureido group, a thioureido group, an N-hydroxyureido group, an imido group, an (alkoxy or aryloxy) carbonylamino group, a sulfamoylamino group, a semicarbazide group, a thiosemicarbazide group, a hydrazino group, an ammonio group, an oxamoylamino group, an N-(alkyl or aryl) sulfonylureido group, an N-acylureido group, an N-acylsulfamoylamino group, a hydroxyamino group, a nitro group, a heterocyclic group containing a quarternary nitrogen atom (e.g., a pyridinio group, an imidazolio group, a quinolinio group, or an isoquinolinio group), an isocyano group, an imino group, a mercapto group, an (alkyl, aryl, or heterocyclic) thio group, an (alkyl, aryl, or heterocyclic) dithio group, an (alkyl or aryl) sulfonyl group, an (alkyl or aryl) sulfinyl group, a sulfo group or a salt of a sulfo group, a sulfamoyl group, an N-acylsulfamoyl group, an N-sulfonylsulfamoyl group or a salt of an N-sulfonylsulfamoyl group, a phosphino group, a phosphinyl group, a phosphinyloxy group, a phosphinylamino group, or a silyl group.

In the alkyl group, the active methine group is a methine group in which substitution with two electron-withdrawing groups is made, where the electron-withdrawing groups can be acyl groups, alkoxycarbonyl groups, aryloxycarbonyl groups, carbamoyl groups, alkylsulfonyl groups, arylsulfonyl groups, sulfamoyl groups, trifluoromethyl groups, cyano groups, nitro groups, or carbonimidoyl groups. The two electron-withdrawing groups may be bonded together so as to form a ring structure.

In addition, the salt means a compound of a cation and one of the above groups, where the cation may be inorganic or organic. The inorganic cation is, for example, an alkali metal, an alkaline-earth metal, or a heavy metal, and the organic cation is, for example, an ammonium ion or a phosphonium ion.

In each of the above substituents, one or more further substitutions with one or more of the above substituents may be made.

Further, it is preferable that the mercapto compound realizing the antioxidant film 2 is one of the following mercapto compounds.

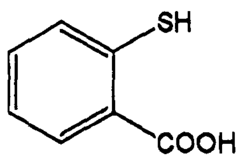

(S-1)

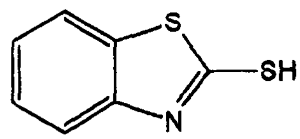

(S-2)

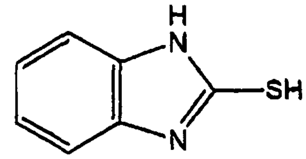

(S-3)

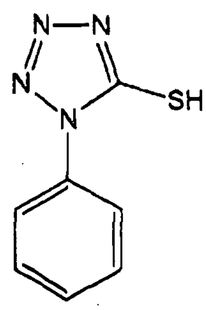

(S-4)

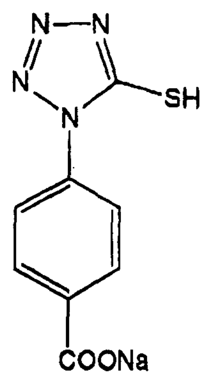

(S-5)

Furthermore, it is also preferable that the mercapto compound realizing the antioxidant film 2 is one of the mercapto compounds expressed by the formulas [1-1]-[1-12], [A-1]-[A-20], [B-1]-[H-39], [g-1]-[g-36], [h-1]-[h-32], [1-1] -[1-12], [II-1]-[II-26] which are disclosed in Japanese Unexamined Patent Publication No. 2001-242586.

Reductive Compound

Next, the reductive compound of which the antioxidant film 2 is made is explained below.

The reductive compound for the antioxidant film 2 is a compound chosen from hydroxylamines, hydroxamic acids, hydroxyureas, hydroxyurethanes, hydroxysemicarbazides, reductones (including reductone derivatives), anilines, phenols (including the polyphenols such as chroman-6-ols, 2,3-dihydrobenzofuran-5-ols, amino phenols, sulfonamide phenols, hydroquinones, catechols, resorcinols, benzenetriols, and bisphenols), hydrazines, hydrazides, and phenidones.

The hydroxylamines can be expressed by the general formula (B1), the hydroxamic acids can be expressed by the general formula ($B_2$), the hydroxyureas can be expressed in the general formula ($B_3$), the hydroxyurethanes

can be expressed by the general formula ($B_4$), the hydroxysemicarbazides can be expressed by the general formula ($B_5$), the reductones can be expressed by the general formula ($B_6$), the anilines can be expressed by the general formula ($B_7$), the phenols can be expressed by the general formula ($B_8$), ($B_9$), ($B_{10}$), the hydrazines can be expressed by the general formula ($B_{11}$), the hydrazides can be expressed by the general formula ($B_{12}$), and phenidones can be expressed by the general formula ($B_{13}$). The general formulas ($B_1$), ($B_2$), ($B_3$), ($B_4$), ($B_5$), ($B_6$), ($B_7$), ($B_8$), ($B_9$), ($B_{10}$), ($B_{11}$), ($B_{12}$), and ($B_{13}$) are indicated below.

($B_1$)

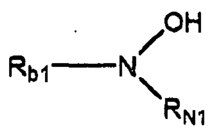

($B_2$)

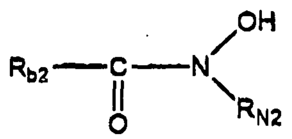

($B_3$)

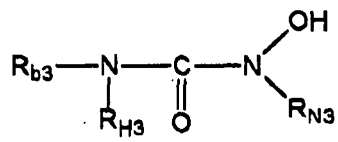

($B_4$)

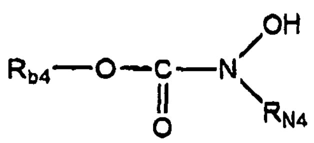

($B_5$)

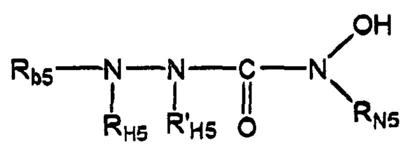

($B_6$)

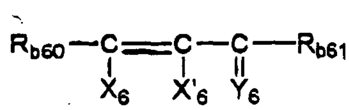

($B_7$)

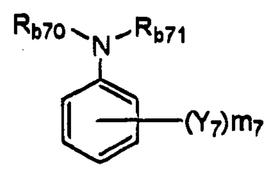

($B_8$)

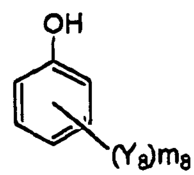

($B_9$)

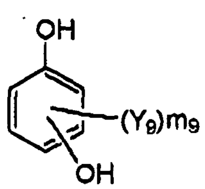

($B_{10}$)

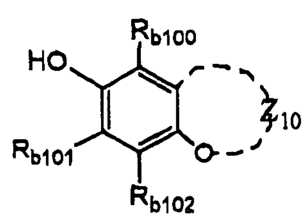

($B_{11}$)

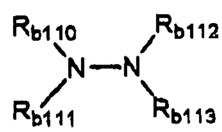

In the general formulas. ($B_1$) to ($B_{13}$), each of $R_{b1}$, $R_{b2}$, $R_{b3}$, $R_{b4}$, $R_{b5}$, $R_{b70}$, $R_{b71}$, $R_{b110}$, $R_{b111}$, $R_{b112}$, $R_{b113}$, $R_{b12}$, $R_{b13}$, $R_{b130}$, $R_{b131}$, $R_{b132}$, $R_{b133}$, $R_{N1}$, $R_{N2}$, $R_{N3}$, $R_{N4}$, and $R_{N5}$ represents a hydrogen atom, an alkyl group, an aryl group, or a heterocyclic group, each of $R_{H3}$, $R_{H5}$, $R'_{H5}$, $R_{H12}$, $R'_{H12}$, and $R_{H13}$ represents a hydrogen atom, an alkyl group, an aryl group, an acyl group, an alkylsulfonyl group, or an arylsulfonyl group, and $R_{H3}$ may further represent a hydroxy group. In addition, each of $R_{b100}$, $R_{b101}$, and $R_{b102}$ represents a hydrogen atom or a substituent, each of $Y_7$ and $Y_8$ represents a substituent other than the hydroxy group, $Y_9$ represents a substituent, $m_7$ is an integer of 0 to 5, $m_8$ is an integer of 1 to 5, and $m_9$ is an integer of 0 to 4. Further, each of $Y_7$, $Y_8$, and $Y_9$ may further represent an aryl

group which is condensed with a benzene ring (e.g., a condensed benzene ring), and the aryl group may contain a substitution group. $Z_{10}$ represents a nonmetal atom group which can form a ring, and $X_{12}$ represents a hydrogen atom, an alkyl group, an aryl group, a heterocyclic group, an alkoxy group, an amino group (such as an alkylamino group, an arylamino group, a heterocyclic amino group, or a cyclic amino group), or a carbamoyl group.

In the general formula ($B_6$), each of $X_6$ and $X'_6$ represents a hydroxy group, an alkoxy group, a mercapto group, an alkylthio group, an amino group (such as an alkylamino group, an arylamino group, a heterocyclic amino group, or a cyclic amino group), an acylamino group, a sulfonamide group, an alkoxycarbonylamino group, an ureido group, an acyloxy group, an acylthio group, an alkylaminocarbonyloxy group, or an arylaminocarbonyloxy group, each of $R_{b60}$ and $R_{b61}$ represents an alkyl group, an aryl group, an amino group, an alkoxy group, or an aryloxy group, and $R_{b60}$ and $R_{b61}$ may be connected to each other so as to form a ring structure. Finally, $Y_6$ represents an oxygen atom or a sulfur atom.

In the above explanations on the general formulas ($B_1$) to ($B_{13}$), the alkyl group is a linear, branched, or cyclic, substituted or unsubstituted, alkyl group containing 1 to 30 carbon atoms, the aryl group is a monocyclic or condensed, substituted or unsubstituted, aromatic hydrocarbon ring such as a phenyl group and a naphthyl group, the heterocyclic group is a monocyclic or condensed, substituted or unsubstituted, aromatic or nonaromatic, heterocyclic group containing at least one hetero atom.

For example, each substituent in the above reductive compound is a halogen atom (a fluorine atom, a chlorine atom, a bromine atom or an iodine atom), an alkyl group (a linear, branched, or cyclic, alkyl group such as a bicycloalkyl group and an active methine group), an alkenyl group, an alkynyl group, an aryl group, a heterocyclic group (irrespective of the position of the substitution), an acyl group, an alkoxycarbonyl group, an aryloxycarbonyl group, a heterocyclic oxycarbonyl group, a carbamoyl group, an N-hydroxycarbamoyl group, an N-acylcarbamoyl group, an N-sulfonylcarbamoyl group, an N-carbamoylcarbamoyl group, a thiocarbamoyl group, an N-sulfamoylcarbamoyl group, a carbazoyl group, a carboxy group or a salt of a carboxy group, an oxalyl group, an oxamoyl group, a cyano group, a carbonimidoyl group, a formyl group, a hydroxy group, an alkoxy group (such as a group which contains a repetition of a unit comprised of an ethyleneoxy group or a propyleneoxy group), an aryloxy group, a heterocyclic oxy group, an acyloxy group, a carbonyloxy (alkoxy or aryloxy) group, a carbamoyloxy group, a sulfonyloxy group, an amino group, an (alkyl, aryl, or heterocyclic) amino group, an acylamino group, a sulfonamide group, an ureido group, a thioureido group, an N-hydroxyureido group, an imido group, an (alkoxy or aryloxy) carbonylamino group, a sulfamoylamino group, a semicarbazide group, a thiosemicarbazide group, a hydrazino group, an ammonio group, an oxamoylamino group, an N-(alkyl or aryl) sulfonylureido group, an N-acylureido group, an N-acylsulfamoylamino group, a hydroxyamino group, a nitro group, a heterocyclic group containing a quarternary nitrogen atom (e.g., a pyridinio group, an imidazolio group, a quinolinio group, or an isoquinolinio group), an isocyano group, an imino group, a mercapto group, an (alkyl, aryl, or heterocyclic) thio group, an (alkyl, aryl, or heterocyclic) dithio group, an (alkyl or aryl) sulfonyl group, an (alkyl or aryl) sulfinyl group, a sulfo group or a salt of a sulfo group, a sulfamoyl group, an N-acylsulfamoyl group, an N-sulfonylsulfamoyl group or a salt of an N-sulfonylsulfamoyl group, a phosphino group, a phosphinyl group, a phosphinyloxy group, a phosphinylamino group, or a silyl group.

In the alkyl group, the active methine group is a methine group in which substitution with two electron-withdrawing groups is made, where the electron-withdrawing groups can be acyl groups, alkoxycarbonyl groups, aryloxycarbonyl groups, carbamoyl groups, alkylsulfonyl groups, arylsulfonyl groups, sulfamoyl groups, trifluoromethyl groups, cyano groups, nitro groups, or carbonimidoyl groups. The two electron-withdrawing groups may be bonded together so as to form a ring structure.

In addition, the salt means a compound of a cation and one of the above groups, where the cation may be inorganic or organic. The inorganic cation is, for example, an alkali metal, an alkaline-earth metal, or a heavy metal, and the organic cation is, for example, an ammonium ion or a phosphonium ion.

In each of the above substituents, one or more further substitutions with one or more of the above substituents may be made.

In the general formulas ($B_1$) to ($B_5$), each of $R_{N1}$, $R_{N2}$, $R_{N3}$, $R_{N4}$, and $R_{N5}$ is preferably a hydrogen atom or an alkyl group, and the alkyl group is a linear, branched, or cyclic, substituted or unsubstituted, alkyl group containing 1 to 12 carbon atoms, and more preferably a linear or branched, substituted or unsubstituted, alkyl group containing 1 to 6 carbon atoms (e.g., a methyl group, an ethyl group, or a benzyl group).

In the general formula ($B_1$), $R_{b1}$ is preferably an alkyl group or a heterocyclic group, where the alkyl group is a linear, branched, or cyclic, substituted or unsubstituted, alkyl group containing preferably 1 to 30 carbon atoms, and more preferably 1 to 18 carbon atoms. In addition, the heterocyclic group is a five-membered or six-membered, monocyclic or condensed, aromatic or nonaromatic, heterocyclic group, and may contain at least one substituent. In particular, the aromatic heterocyclic group is preferable, and for example, a pyridine ring group, a pyrimidine ring group, a triazine ring group, a thiazole ring group, a benzothiazole ring group, an oxazole ring group, a benzoxazole ring group, an imidazole ring group, a benzimidazole ring group, a pyrazole ring group, an indazole ring group, an indole ring group, a purine ring group, a quinoline ring group, an isoquinoline ring group, or a quinazoline ring group. Above all,

the triazine ring group and the benzothiazole ring group are especially preferable. Further, in another preferable example of the compound expressed by the general formula ($B_1$), the alkyl group or the heterocyclic group represented by $R_{b1}$ contains at least one -N($R_{N1}$)OH group as at least one substituent.

In the general formula ($B_2$), $R_{b2}$ is preferably an alkyl group, an aryl group, or a heterocyclic group, and the alkyl group and the aryl group are more preferable than the heterocyclic group. The preferable limitations on the alkyl group which can realize the group $R_{b2}$ are identical to the aforementioned limitations on the alkyl group which can realize the group $R_{b1}$. The aryl group is preferably a phenyl group or a naphthyl group, and the phenyl group is particularly preferable. In addition, the aryl group may contain at least one substituent. Further, in another preferable example of the compound expressed by the general formula ($B_2$), the group $R_{b2}$ contains at least one -CON($R_{N2}$)OH group as at least one substituent.

In the general formula ($B_3$), $R_{b3}$ is preferably an alkyl group or an aryl group, and the preferable limitations on the alkyl group and the aryl group which can realize the group $R_{b3}$ are identical to the aforementioned limitations on the alkyl group and the aryl group which can realize the group $R_{b1}$ or $R_{b2}$. $R_{H3}$ is preferably a hydrogen atom or an alkyl group, and the hydrogen atom is more preferable than the alkyl group. In addition, in another preferable example of the compound expressed by the general formula ($B_3$), the group $R_{b3}$ contains at least one -N($R_{H3}$)CON($R_{N3}$)OH group as at least one substituent. Further, the groups $R_{b3}$ and $R_{H3}$ may be bonded to each other so as to form a ring structure (preferably a five-membered or six-membered saturated hetero ring).

In the general formula ($B_4$), $R_{b4}$ is preferably an alkyl group, and the preferable limitations of the alkyl group which can realize the group $R_{b4}$ are identical to the aforementioned limitations on the alkyl group which can realize the group $R_{b1}$. In addition, in another preferable example of the compound expressed by the general formula ($B_4$), the group $R_{b4}$ contains at least one -CCON($R_{N4}$)OH group as at least one substituent.

In the general formula ($B_5$), $R_{b5}$ is preferably an alkyl group or an aryl group, and the aryl group is more preferable than the alkyl group. The preferable limitations on the alkyl group and the aryl group which can realize the group $R_{b5}$ are identical to the aforementioned limitations on the alkyl group and the aryl group which can realize the group Rb1 or $R_{b2}$. $R_{H5}$ and $R'_{H5}$ are preferably a hydrogen atom or an alkyl group, and the hydrogen atom is more preferable than the alkyl group.

In the general formula ($B_6$), the groups $R_{b60}$ and $R_{b61}$ are preferably bonded to each other so as to form a ring structure, which is a five- to seven-membered, monocyclic or condensed, carbocyclic or heterocyclic, nonaromatic group. For example, preferable ring structures are the rings of 2-cyclopentene-1-one, 2,5-dihydxofuran-2-one, 3-pyrroline-2-one, 4-pyrazoline-3-one, 2-cyclohexene-1-one, 5,6-dihydro-2H-pyran-2-one, 5,6-dihydro-2-pyridone, 1,2-dihydronaphthalene-2-one, cumarin (benzo-α-pyran-2-one), 2-quinolone, 1,4-dihydronaphthalene-1-one, chromone (benzo-γ-pyran-4-one), 4-quinolone, indene-1-one, 3-pyrroline-2,4-dione ring, uracil, thiouracil, and dithiouracil. Above all, the rings of 2-cyclopentene-1-one, 2,5-dihydrofuran-2-one, 3-pyrroline-2-one, 4-pyrazoline-3-one, 1,2-dihydronaphthalene-2-one, cumarin (benzo-α-pyran-2-one), 2-quinolone, 1,4-dihydronaphthalene-1-one, chromone (benzo-γ-pyran-4-one), 4-quinolone, indene-1-one, and dithiouracil are still more preferable than the other ring structures. Further, the rings of 2-cyclopentene-1-one, 2,5-dihydrofuran-2-one, 3-pyrroline-2-one, indene-1-one, and 4-pyrazoline-3-one are most preferable.

When $X_6$ and $X'_6$ each represent a cyclic amino group, the cyclic amino group is a nitrogen-containing nonaromatic heterocyclic group containing a bond with a nitrogen atom, and for example, a pyrrolidino group, a piperidino group, a piperazino group, a morpholino group, a 1,4-thiazine-4-yl group, a 2,3,5,6-tetrahydro-1,4-thiazine-4-yl group, or an indolyl group.

The groups $X_6$ and $X'_6$ are preferably a hydroxy group, a mercapto group, an amino group (such as an alkylamino group, an arylamino group, or a cyclic amino group), an acylamino group, a sulfonamide group, an acyloxy group, or an acylthio group, where the hydroxy group, the mercapto group, the amino group, the alkylamino group, the cyclic amino group, the sulfonamide group, the acylamino group, and the acyloxy group are more preferable than the other groups. Above all, the hydroxy group, the amino group, the alkylamino group, and the cyclic amino group are particularly preferable. Furthermore, it is preferable that at least one of the groups $X_6$ and $X'_6$ is a hydroxy group.

Preferably, $Y_6$ represents an oxygen atom.

In the general formula ($B_7$), each of $R_{b70}$ and $R_{b71}$ represents a hydrogen atom, an alkyl group, or an aryl group, and the alkyl group are more preferable than the other group or atom. The preferable limitations on the alkyl group which can realize the group $R_{b70}$ or $R_{b71}$ are identical to the aforementioned limitations on the alkyl group which can realize the group $R_{b1}$. The groups $R_{b70}$ and $R_{b71}$ are preferably bonded to each other so as to form a ring structure such as a pyrrolidine ring, a piperidine ring, a morpholino ring, or a thiomorpholino ring.

Preferably, $Y_7$ represents a substituent, which is preferably an alkyl group, an alkoxy group, an acylamino group, a sulfonamide group, an ureido group, an acyl group, an alkoxycarbonyl group, a carbamoyl group, a sulfamoyl group, a chlorine atom, a sulfo group, a salt of a sulfo group, a carboxy group, or a salt of a carboxy group. The preferable limitations on the alkyl group which can realize the group $Y_7$ are identical to the aforementioned limitations on the alkyl group which can realize the group $R_{b1}$. Preferably, $m_7$ is 0 to 2.

In the general formula ($B_8$), $m_8$ is preferably 1 to 4. In the case where $m_8$ is more than one, the plurality of substituents $Y_8$ may be either identical or different. Preferably, the substituent $Y_8$ in the case where $m_8$ is one or at least one of the plurality of substituents $Y_8$ in the case where $m_8$ is more than one is an amino group (such as an alkylamino group or an arylamino group), a sulfonamide group, or an acylamino group. In the case where $m_8$ is more than one, the substituents $Y_8$ are preferably a sulfonamide group, an acylamino group, an ureido group, an alkyl group, an alkylthio group, an acyl group, an alkoxycarbonyl group, a carbamoyl group, a sulfo group, a salt of a sulfo group, a carboxy group, a salt of a carboxy group, or a chlorine atom. In the case where a substitution with an o'-(p'-) hydroxyphenyl methyl group as the substituent $Y_8$ is made at the ortho position with respect to the hydroxy group, the general formula ($B_8$) expresses compounds generally called bisphenols. These bisphenols are also preferable examples of the compound expressed by the general formula ($B_8$).

In the general formula ($B_9$), the two hydroxy groups may be located at ortho, meta, or para positions with respect to each other, where the ortho positions realize catechols, the meta positions realize resorcinols, and the para positions realize hydroquinones. Preferably, $m_9$ is 1 or 2. In the case where $m_9$ is more than one, the plurality of substituents $Y_9$ may be either identical or different. The substituent $Y_9$ is preferably a chlorine atom, an acylamino group, an ureido group, a sulfonamide group, an alkyl group, an alkylthio group, an alkoxy group, an acyl group, an alkoxycarbonyl group, a carbamoyl group, a sulfo group, a salt of a sulfo group, a carboxy group, a salt of a carboxy group, a hydroxy group, an alkylsulfonyl group, or an arylsulfonyl group. It is also preferable that the substituent $Y_9$ is a condensed ring, so that the general formula ($B_9$) expresses 1, 4-express naphthohydroquinone. When the general formula ($B_9$) expresses catechols, it is preferable that the substituent $Y_9$ is a sulfo group, a salt of a sulfo group, or a hydroxy group.

In the general formula ($B_{10}$), when each of $R_{b100}$, $R_{b101}$, and $R_{b102}$ represents a substituent, It is preferable that each of the substituents $R_{b100}$, $R_{b101}$, and $R_{b102}$ represents the aforementioned atom or groups which are preferable as the substituent $Y_9$, and in particular the alkyl group (especially the methyl group) is preferable as each of the substituents $R_{b100}$, $R_{b101}$, and $R_{b102}$. In addition, $Z_{10}$ constitutes a ring structure which is preferably a chroman ring or a 2,3-dihydrobenzofuran ring. Further, the ring structure may contain a substituent, or constitute a spiro ring.

In the general formula ($B_{11}$), each of $R_{b110}$, $R_{b111}$, $R_{b112}$, and $R_{b113}$ preferably represents an alkyl group, an aryl group, or a heterocyclic group. The preferable limitations on the alkyl group, the aryl group, and the heterocyclic group which can realize each of the groups $R_{b110}$, $R_{b111}$, $R_{b112}$, and $R_{b113}$ are identical to the aforementioned limitations on the alkyl group, the aryl group, and the heterocyclic group which can realize the group $R_{b1}$ or $R_{b2}$, and in particular the alkyl group is preferable as each of the substituents $R_{b110}$, $R_{b111}$, $R_{b112}$, and $R_{b113}$. In addition, two of the groups $R_{b110}$, $R_{b111}$, $R_{b112}$, and $R_{b113}$ may be bonded to each other so as to form a ring structure. The ring structure is a five-membered or six-membered, nonaromatic ring, which may be a hetero ring, and for example, a pyrrolidine ring, a piperidine ring, a morpholino ring, a thiomorpholino ring, or a hexahydropyridazine ring.

In the general formula ($B_{12}$), $R_{b12}$ preferably represents an alkyl group, an aryl group, or a heterocyclic group. The preferable limitations on the alkyl group, the aryl group, and the heterocyclic group which can realize the group $R_{b12}$ are identical to the aforementioned limitations on the alkyl group, the aryl group, and the heterocyclic group which can realize the group $R_{b1}$ or $R_{b2}$. Preferably, $X_{12}$ represents an alkyl group, an aryl group (more preferably a phenyl group), a heterocyclic group, an alkoxy group, or an amino group (such as an alkylamino group, an arylamino group, a heterocyclic amino group, or a cyclic amino group), where the alkyl group (especially the alkyl group containing 1 to 8 carbon atoms), the aryl group (especially the phenyl group), and the amino group (such as the alkylamino group, the arylamino group, or the cyclic amino group) are particularly preferable. In addition, each of $R_{H12}$ and $R'_{H12}$ is preferably a hydrogen atom or an alkyl group, and the hydrogen atom is more preferable.

In the general formula ($B_{13}$), $R_{b13}$ preferably represents an alkyl group or aryl group, and the preferable limitations on the alkyl group and the aryl group which can realize the group $R_{b12}$ are identical to the aforementioned limitations on the alkyl group and the aryl group which can realize the group $R_{b1}$ or $R_{b2}$. Preferably, each of $R_{b130}$, $R_{b131}$, $R_{b132}$, and $R_{b133}$ is preferably a hydrogen atom, an alkyl group (especially an alkyl group containing 1 to 8 carbon atoms), or an aryl group (especially a phenyl group). In addition, $R_{H13}$ preferably represents a hydrogen atom or an acyl group, and the hydrogen atom is more preferable.

The reductive compound of which the antioxidant film 2 is made has a characteristic feature that the molecule of the reductive compound contains at least one absorptive group which corresponds to the metal-binding group 4 illustrated in FIG. 1 at at least one position of the molecule. Each absorptive group is a group which can be directly absorbed by metal or promote absorption of the molecule by metal. Specifically, the absorptive group is a mercapto group, a salt of a mercapto group, a thione group (-C (=S)-), a sulfide group, a disulphide group, a cationic group, an ethynyl group, or a heterocyclic group which contains at least one of a nitrogen atom, a sulfur atom, a selenium atom, and a tellurium atom.

The mercapto group which has the function of the absorptive group (or a salt of such a mercapto group) according to the present embodiment may be a mercapto group (or a salt of a mercapto group) per se, and preferably a heterocyclic group, an aryl group, or an alkyl group in which at least one substitution with at least one mercapto group

(or a salt of such a mercapto group) is made. The heterocyclic group is a five- to seven-membered, monocyclic or condensed, aromatic or nonaromatic, heterocyclic group, and for example, an imidazole ring group, a thiazole ring group, an oxazole ring group, a benzimidazole ring group, a benzothiazole ring group, a benzoxazole ring group, a triazole ring group, a thiadiazole ring group, an oxadiazole ring group, a tetrazole ring group, a purine ring group, a pyridine ring group, a quinoline ring group, an isoquinoline ring group, a pyrimidine ring group, or a triazine ring group. Alternatively, the heterocyclic group may be a heterocyclic group containing a quarternary nitrogen atom. In this case, one of the at least one mercapto group as a substituent may be dissociated into a mesoion. The heterocyclic group containing a quarternary nitrogen atom is, for example, an imidazolium ring group, a pyrazolium ring group, a thiazolium ring group, a triazorium ring group, a tetrazolium ring group, a thiadiazolium ring group, a pyridinium ring group, a pyrimidinium ring group, or a triazinium ring group, where the triazorium ring group (e.g., a 1,2,4-triazorium-3-thiolate ring group) is preferable. The aryl group is, for example, a phenyl group or a naphthyl group. The alkyl group is, for example, a linear, branched, or cyclic, alkyl group containing 1 to 30 carbon atoms. When a salt of a mercapto group is formed, the counter ion is, for example, a cation of an alkali metal, an alkaline-earth metal, or a heavy metal ($Li^+$, $Na^+$, $K^+$, $Mg^{2+}$, $Ag^+$, $Zn^{2+}$, or the like), an ammonium ion, a phosphonium ion, or a heterocyclic group containing a quarternary nitrogen atom.

Further, the above mercapto group which has the function of the absorptive group according to the present embodiment may also be tautomerized into a thione group. Specifically, the thione group is a thioamido group (a -C (=S)-NH- group in this case) or a group which contains a thioamido group as a partial structure (e.g., a linear or cyclic group containing a thioamido group, a thioureido group, a thiourethane group, or a dithiocarbamate ester group) . The cyclic group is, for example, a thiazolidine-2-thione group, an oxazolidine-2-thione group, a 2-thiohydantoin group, a rhodanine group, an isorhodanine group, a thiobarbituric acid group, or a 2-thioxo-oxazolidine-4-one group.

The thione group which has the function of the absorptive group includes a linear or cyclic group containing a thioamido group, a thioureido group, a thiourethane group, or a dithiocarbamate ester group, which cannot be tautomerized into a mercapto group (i.e., which does not have a hydrogen atom at the $\alpha$ position of the thine group), as well as the aforementioned thione group which is tautomerized from a mercapto group.

The aforementioned heterocyclic group which contains at least one of a nitrogen atom, a sulfur atom, a selenium atom, and a tellurium atom (as an absorptive group) is a nitrogen-containing heterocyclic group containing as a partial structure of a hetero ring an -NH- group which can produce imino silver (>NAg), or a heterocyclic group containing as a partial structure of a hetero ring a -S- group, a -Se- group, a -Te- group, or a =N- group, which can coordinate a silver ion through a coordinate bond. The former heterocyclic group is, for example, a benzotriazole group, a triazole group, an indazole group, a pyrazole group, a tetrazole group, a benzoimidazole group, an imidazole group, or a purine group. The latter heterocyclic group is, for example, a thiophene group, a thiazole group, an oxazole group, a benzothiophene group, a benzothiazole group, a benzoxazole group, a thiadiazole group, an oxadiazole group, a triazine group, a selenoazole group, a benzoselenoazole group, a tellurazole group, or a benzotellurazole group. However, the former heterocyclic group is more preferable than the latter.

Although all of the groups containing "-S-" or "-S-S-" as a partial structure can be the sulfide group or disulphide group which is mentioned before as an absorptive group, the sulfide group or disulphide group as an absorptive group is preferably a group containing, as a partial structure, alkyl (or alkylene)-X-alkyl (or alkylene), aryl (or arylene)-X-alkyl (or alkylene), or aryl (or arylene)-X-a aryl (or arylene), where X represents an -S- group or an -S-S- group. In addition, the above sulfide group or disulphide group may constitute a ring structure. In this case, the sulfide group or disulphide group is, for example, a group containing a thiolane ring, a 1,3-dithiolan ring, a 1,2-dithiolan ring, a thiane ring, a dithiane ring, or a thiomorpholine ring. Further, the group containing alkyl (or alkylene)-S-alkyl (or alkylene) as a partial structure is particularly preferable as the sulfide group, and the 1,2-dithiolan ring group is particularly preferable as the disulphide group.

The cationic group which has the function of the absorptive group is a group containing a quarternary nitrogen atom. Specifically, the cationic group is a group containing an ammonio group, or a group containing a nitrogen-containing heterocyclic group which contains a quarternary nitrogen atom. The ammonio group is a trialkylammonio group, a dialkylarylammonio group, an alkyldiarylammonio group, or the like, and more specifically, a benzyldimethylammonio group, a trihexylammonio group, or a phenyldiethylammonio group. The nitrogen-containing heterocyclic group which contains a quarternary nitrogen atom is, for example, a pyridinio group, a quinolinio group, an isoquinolinio group, or an imidazolio group. Above all, the pyridinio group and the imidazolio group are preferable, and the pyridinio group is particularly preferable. The above nitrogen-containing heterocyclic group can also contain one or more arbitrary substituents. However, when the nitrogen-containing heterocyclic group is a pyridinio group or an imidazolio group, the substituent is preferably an alkyl group, an aryl group, an acylamino group, a chlorine atom, an alkoxycarbonyl group, or a carbamoyl group. In addition, when the nitrogen-containing heterocyclic group is a pyridinio group, the phenyl group is a particularly preferable substituent.

In addition, the ethynyl group which has the function of the absorptive group is a -C≡CH group, and the hydrogen atom may be substituted.

Further, each of the above adsorptive groups may contain one or more arbitrary substituents.

In addition to the above, the absorptive groups disclosed in U. S. Patent No. 6,054,260, from column 4, line 55 to column 9, line 30 can also be used as the absorptive group contained in the reductive compound of which the antioxidant film 2 is made. Each of these groups disclosed in U. S. Patent No. 6, 054, 260 can be linked to the reductive compound according to the present invention at an arbitrary position of the reductive compound with an arbitrary linking group, which is a single group such as an alkylene group, an arylene group, a heterocyclic group, a single bond, -O-, $-NR_N-$, -S-, -C=O-, $-SO_2-$, -C=S-, -SO-, or -P=O-, or a multivalent linking group formed of an arbitrary combination of an alkylene group, an arylene group, a heterocyclic group, a single bond, -O-, $-NR_N-$, -S-, -C=O-, $-SO_2-$, -C=S-, -SO-, and -P=O-, where $R_N$ represents a hydrogen atom, an alkyl group, an aryl group, or a heterocyclic group, and the linking group may contain one or more arbitrary substituents.

The materials which are more preferable for use as the absorptive group are mercapto-substituted heterocyclic groups (e.g., 2-mercaptothiadiazole groups, 3-mercapto-1,2,4-triazole groups, 5-mercaptotetrazole groups, 2-mercapto-1,3,4-oxadiazole groups, 2-mercaptobenzthiazole groups, and 1,5-dimethyl-1,2,4-triazorium-3-thiolate groups), dimercapto-substituted heterocyclic groups (e.g., 2,4-dimercaptopyrimidine groups, 2,4-dimercaptotriazine groups, 3, 5-dimercapto-1,2,4-triazole groups, 2,5-dimercapto-1,3-thiazole groups), or nitrogen-containing heterocyclic groups (e.g., benzotriazole groups, benzoimidazole groups, and indazole groups) containing as a partial structure of a hetero ring an -NH- group which can produce imino silver (>NAg).

The reductive compound is preferably a compound chosen from the hydroxylamines expressed by the general formula ($B_1$), the hydroxamic acids expressed by the general formula ($B_2$), the hydroxyureas expressed by the general formula ($B_3$), the hydroxysemicarbazides expressed by the general formula ($B_5$), the phenols (including chroman-6-ols, hydroquinones, catechols, resorcinols, bisphenols, and the like) expressed by the general formula ($B_8$), ($B_9$) , and ($B_{10}$), the hydrazines expressed by the general formula ($B_{11}$), the phenidones expressed by the general formula ($B_{13}$), and the reductones (including reductone derivatives) expressed by the general formula ($B_6$), and more preferably a compound chosen from hydroxylamines, hydroxamic acids, hydroxyureas, phenols, hydrazines, and reductones.

The oxidation potentials of reductive compounds can be measured by the measurement methods disclosed (in Japanese) by Akira Fujishima, "Denki Kagaku Sokutei Hou (Measurement Methods in Electrochemistry)," Gihodo Shuppan, Japan, pp.150-208, and The Chemical Society of Japan, "Jikken Kagaku Koza (Courses in Experimental Chemistry)," 4th edition, Vol. 9, pp. 282-344 (1990) Maruzen, Japan. For example, the oxidation potentials canbe measured by using the rotating disk voltammetry.

For example, measurement is performed as follows.

A specimen is dissolved in a mixture of methanol and pH6.5 Britton-Robinson buffer with a volume ratio of 10%:90%, and the solution is aerated with nitrogen gas for 10 minutes. Thereafter, a voltammogram is obtained by using a rotating disk electrode (RDE) made of glassy carbon as a working electrode, platinum wire as a counter electrode, and a saturated calomel electrode as a reference electrode, where the temperature is 25°C, the rotation speed is 1000 RPM, and the sweep speed is 20 mV/sec. Then, a half-wave potential (E1/2) is obtained from the obtained voltammogram.

It is preferable that the oxidation potentials of the reductive compounds used in the present invention are in the range of about -0.3 to 1.0 V when the oxidation potentials are measured by the above method. The oxidation potentials of the reductive compounds are more preferably in the range of about -0.1 to 0.8 V, and particularly preferably in the range of about -0 to 0.6 V.

Hereinbelow, examples of the reductive compounds used in the present invention are indicated, although the reductive compounds used in the present invention are not limited to the following examples.

($B_1$) Hydroxylamines

($B_1$-1)

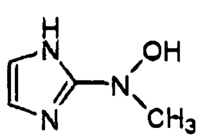

($B_1$-2)

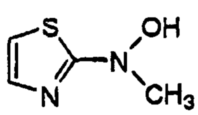

($B_1$-3)

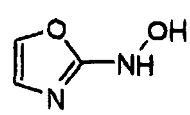

(B₁-4)

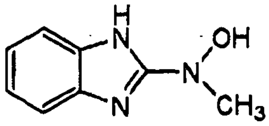

(B₁-5)

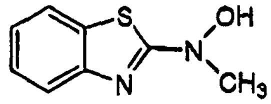

(B₁-6)

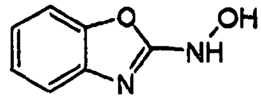

(B₁-7)

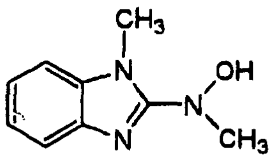

(B₁-8)

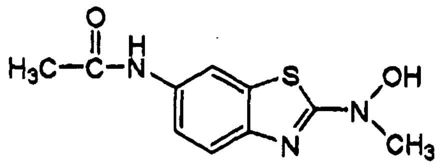

(B₁-9)

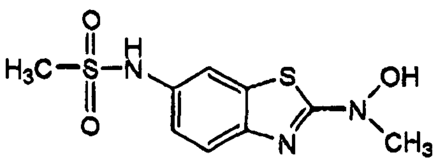

(B1-10)

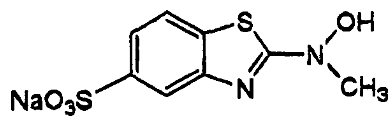

(B1-11)

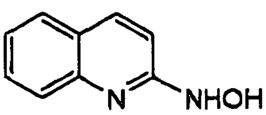

(B1-12)

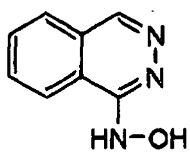

(B1-13)

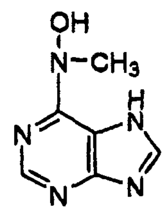

(B1-14)

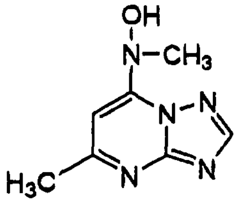

(B1-15)

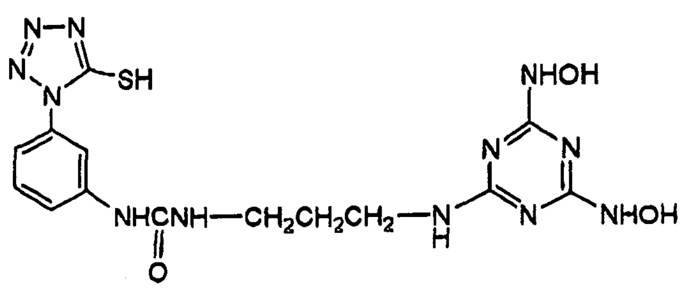

($B_2$) Hydroxamic Acids

($B_2$-1)

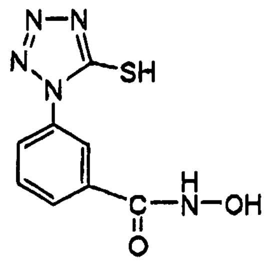

($B_2$-2)

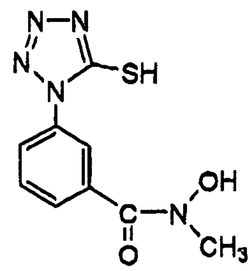

($B_2$-3)

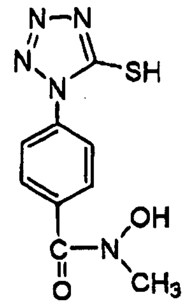

($B_2$-4)

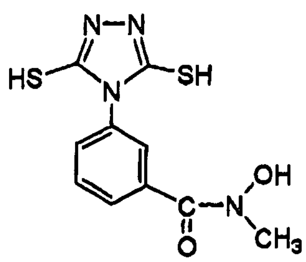

($B_3$) Hydroxyureas

($B_3$-1)

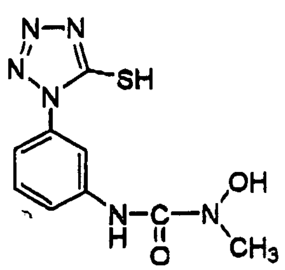

($B_3$-2)

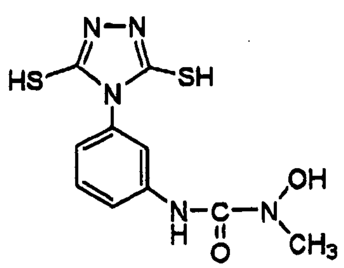

($B_3$-3)

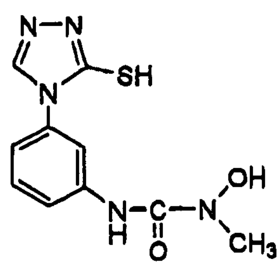

(B3-4)

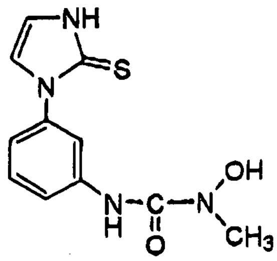

(B3-5)

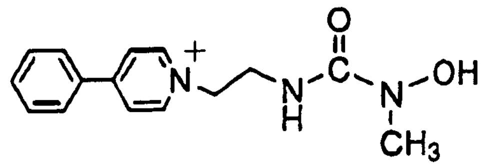

(B3-6)

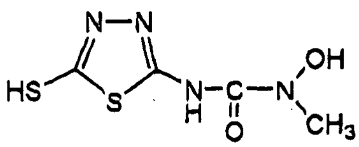

(B3-7)

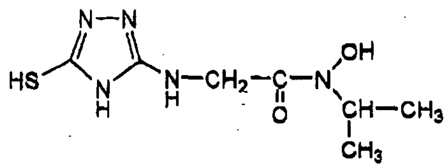

(B3-8)

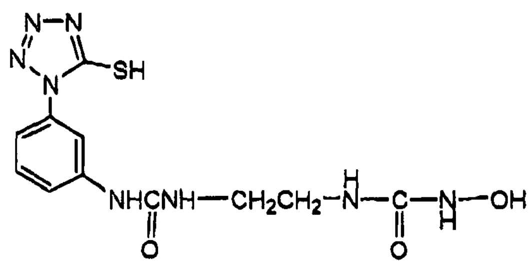

(B3-9)

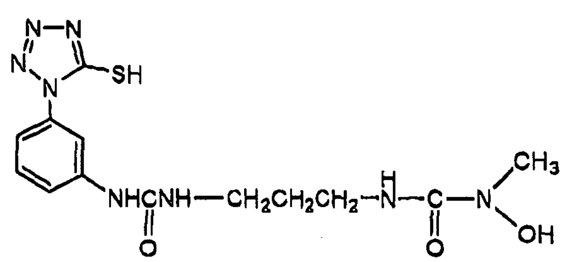

(B3-10)

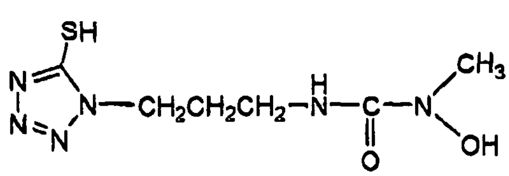

(B3-11)

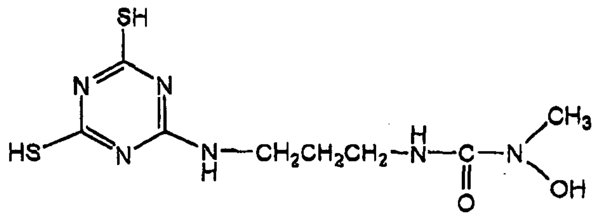

(B3-12)

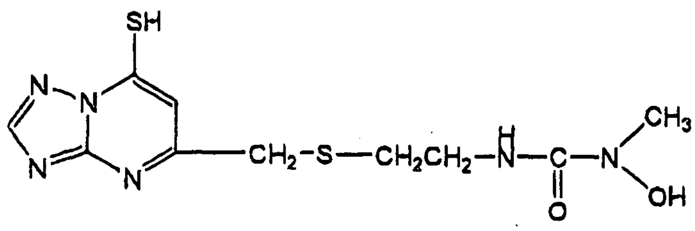

($B_4$) Hydroxyurethanes

(B4-1)

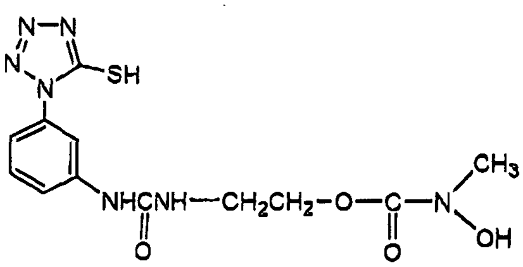

($B_5$) Hydroxysemicarbazides

($B_5$-1)

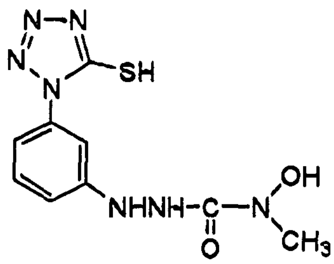

($B_5$-2)

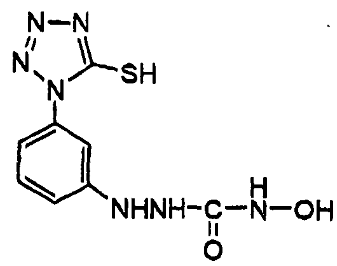

($B_5$-3)

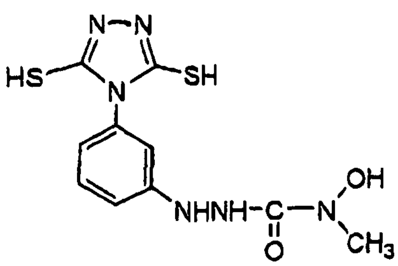

($B_5$-4)

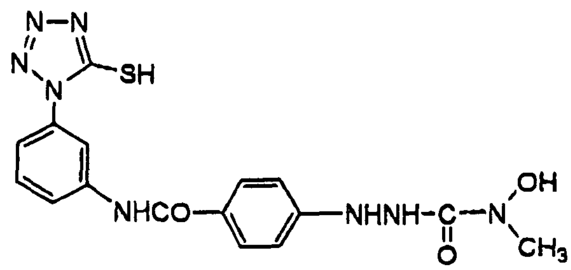

($B_5$-5)

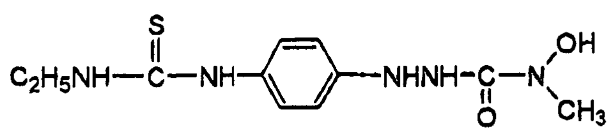

($B_6$) Reductones

($B_6$-1)

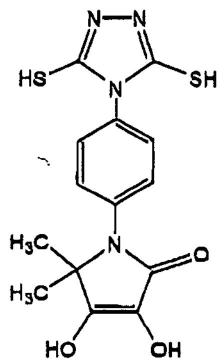

($B_6$-2)

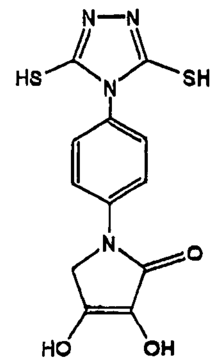

($B_6$-3)

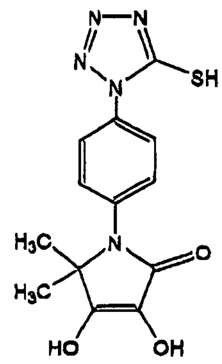

($B_6$-4)

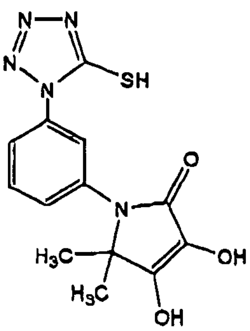

($B_6$-5)

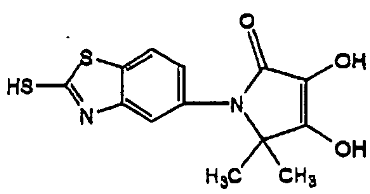

($B_6$-6)

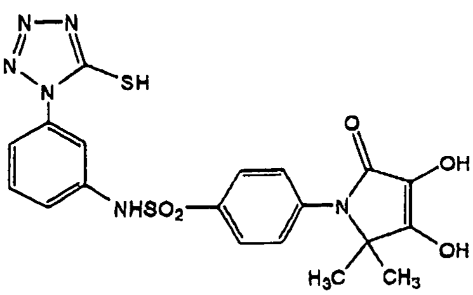

($B_6$-7)

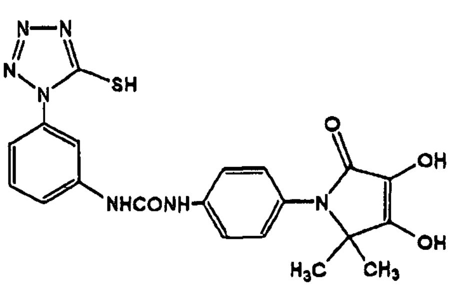

($B_7$) Anilines

($B_7$-1)

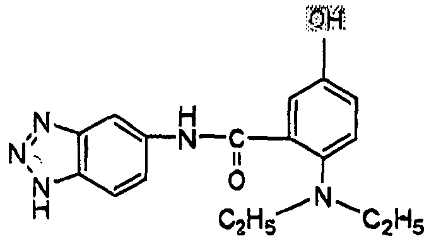

($B_7$-2)

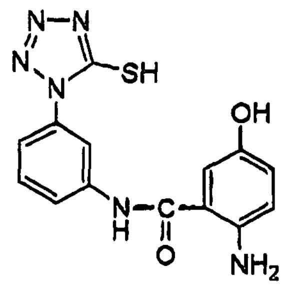

($B_8$) Phenols 1

($B_8$-1)

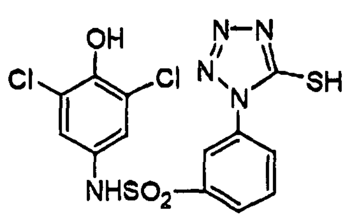

($B_8$-2)

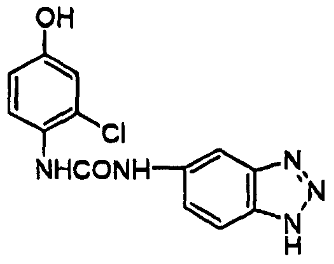

($B_9$) Phenols 2

($B_9$-1)

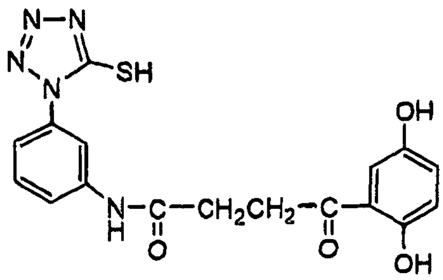

($B_9$-2)

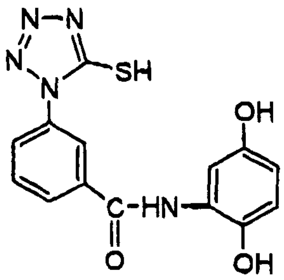

($B_9$-3)

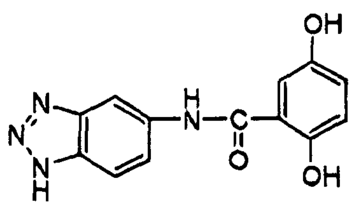

($B_9$-4)

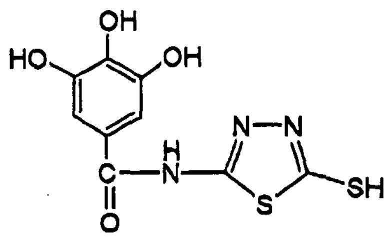

($B_9$-5)

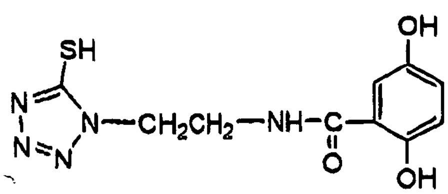

($B_9$-6)

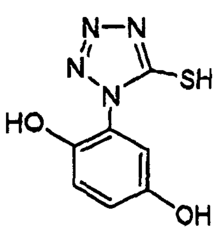

($B_9$-7)

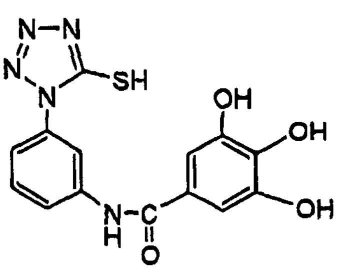

($B_{10}$) Phenols

($B_{10}$-1)

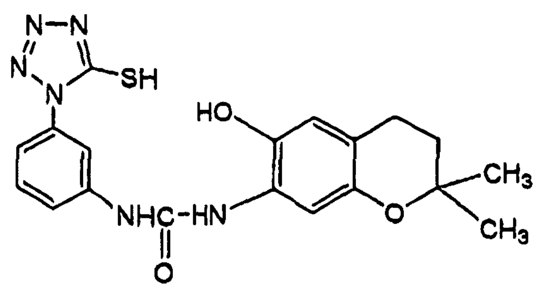

($B_{11}$) Hydrazines

($B_{11}$-1)

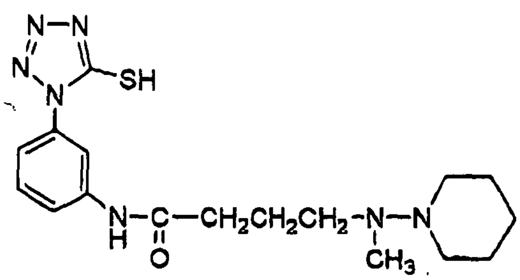

($B_{11}$-2)

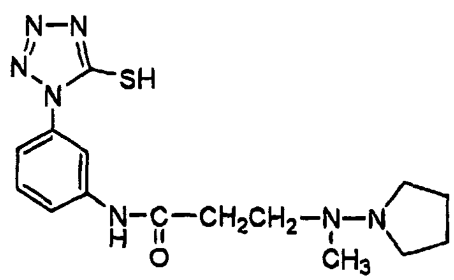

($B_{11}$-3)

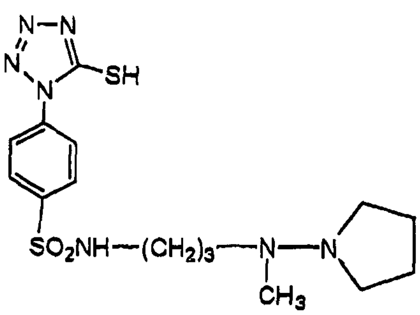

($B_{11}$-4)

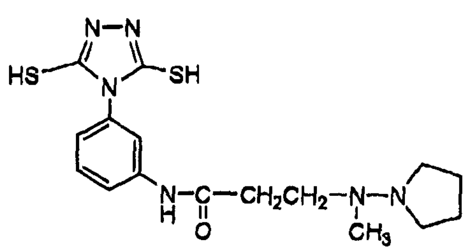

(B11-5)

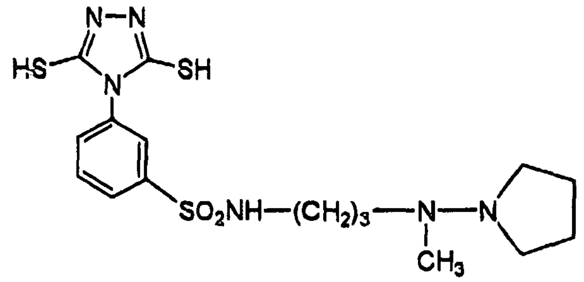

(B11-6)

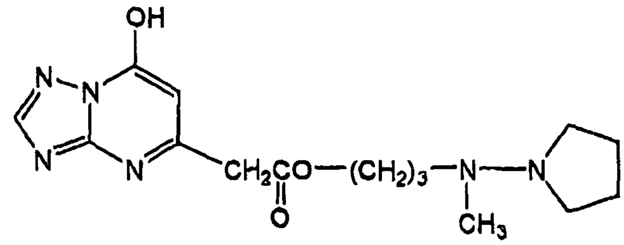

($B_{12}$) Hydrazides

(B12-1)

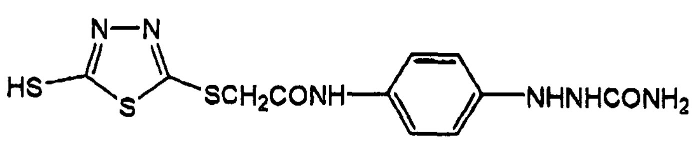

(B12-2)

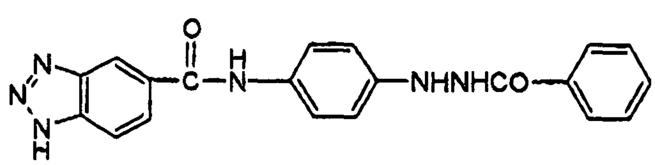

(B12-3)

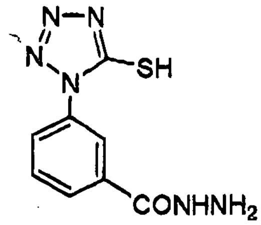

(B12-4)

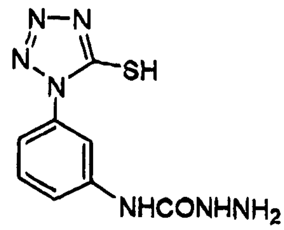

(B12-5)

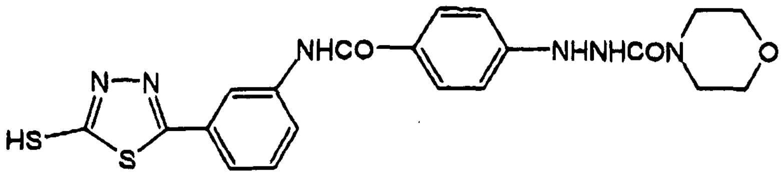

(B12-6)

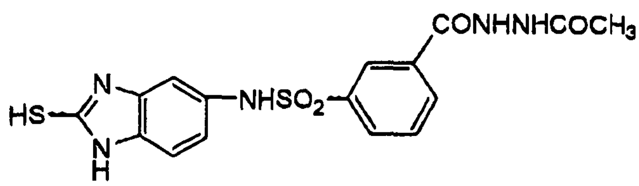

(B12-7)

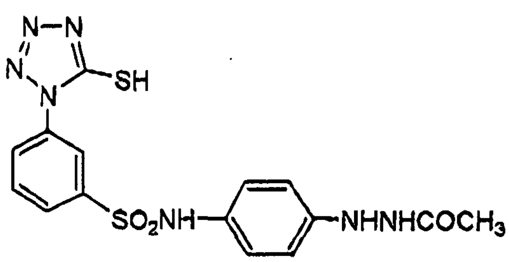

($B_{13}$) Phenidones

($B_{13}$-1)

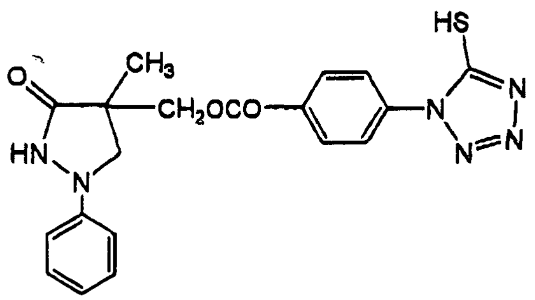

($B_{13}$-2)

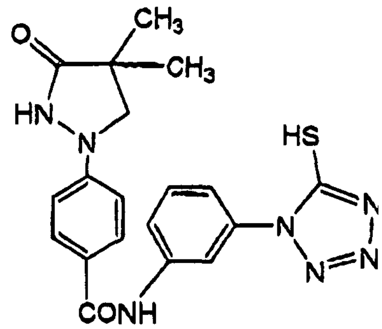

Further, the compounds expressed by the general formulas (1) in each of Japanese Unexamined Patent Publications Nos. 2003-233148 and 2003-084386 can be used as the reductive compound in the present invention. In addition, all of the reductive compounds disclosed in the documents which are referred to in the JPP 2003-233148 and JPP 2003-84386 can also be used as the reductive compound in the present invention.

Furthermore, the compounds expressed by the general formulas (II) to (VI) disclosed in U. S. Patent No. 6,593,075 (corresponding to Japanese Unexamined Patent Publication No. 2001-042466) can also be used as the reductive compound in the present invention. In addition, all of the reductive compounds disclosed in the documents which are referred to in the U. S. Patent No. 6,593,075 can also be used as the reductive compound in the present invention.

When the compounds described above are used for forming the antioxidant film on the surface of the metal film (metallic layer), the function of the mercapto group or the aforementioned absorptive group produces a structure in which single molecules of the compound are arrayed on the surface of the metal film. Therefore, a film which is so thin as not to affect the surface plasmon resonance or localized plasmon resonance can be formed. Thus, it is possible to prevent oxidation of the metal film and deterioration of the device without impairing the essential function of the device, and enhance the durability of the device.

Application to Biosensor

In the case where the optical device according to the present invention is a measurement chip for use with a biosensor, it is desirable to choose a compound containing a binding group which can be bound to a receptor, from among the aforementioned compounds for the antioxidant film 2. For example, when a specimen to be subject to biosensing is IL-8, normally an anti-IL-8 antibody is used as a receptor. Therefore, a compound containing a carboxyl group as a binding group which can be bound to the receptor is chosen. Since the type of the receptor is different according to the type of the specimen to be subject to biosensing, it is preferable to choose the material of which the antioxidant film is made, according to the type of the specimen.

FIG. 2 is a schematic cross-sectional view illustrating the operation of measurement by use of a measurement chip for a biosensor. In the measurement chip illustrated in FIG. 2, an antioxidant film 5 is formed on a silver film 1', and the antioxidant film 5 is made of a compound containing a silver-binding group 4', an antioxidant group 3', and a receptor-binding group 6, where the silver-binding group 4' has the function of being bound to silver, and the receptor-binding group 6 has the function of being bound to a receptor 7.

Before the measurement, a layer of the receptor 7 is formed on a surface of the measurement chip. That is, the measurement is performed in the condition in which the receptor 7 is bound to the receptor-binding group 6 as illustrated in FIG. 2. The measurement chip is placed at the bottom of a vessel 12 in such a manner that the layer of the receptor 7 is exposed. Then, the vessel 12 is filled with a solution containing a specimen 8. Thus, specific binding occurs between the receptor 7 and the specimen 8, so that the specimen 8 is absorbed by the surface of the measurement chip.

In addition, a prism 9 is arranged under the silver film 1'. The prism 9 may be integrally formed with the measurement chip.

In the above configuration, laser light 10 is applied to the silver film 1' through the prism 9, and the illumination angle of the laser light 10 is changed. When the laser light 10 is applied at a specific illumination angle, surface plasmon

resonance occurs, so that the intensity of the reflected light 11 is significantly reduced. The illumination angle of the laser light 10 at which the surface plasmon resonance occurs is influenced by the refractive index of the specimen 8 which is absorbed by the surface of the measurement chip. When the illumination angle of the laser light 10 at which the surface plasmon resonance occurs is measured, the wavelength of light which is absorbed due to the surface plasmon resonance can be obtained by calculation. Further, the permittivity (dielectric constant) of the specimen 8 can be obtained from the wavelength of the absorbed light, and the concentration of the specimen 8 in the solution can be obtained from the permittivity (dielectric constant).

As explained above, the measurement by use of the biosensor is based on the fact that the wavelength of light which is absorbed due to the surface plasmon resonance is influenced by only the refractive index of the medium existing around the surface of the measurement chip. However, when the measurement is performed by using a conventional measurement chip which does not have the antioxidant film 5, oxidation of the surface of the metal film progresses, and the wavelength at which the absorption of the light is peaked (i.e., the absorption peak wavelength) varies, i.e., the so-called drift occurs.

FIG. 3 is a graph indicating variations in the absorption peak wavelengths with the times for which measurement chips are exposed to air. In the graph of FIG. 3, the curve (1) indicates the variations in the absorption peak wavelength when a measurement chip prepared for comparison with the present invention is used for measurement of the absorption peak wavelength, and the curves (2) and (3) indicate the variations in the absorption peak wavelengths when measurement chips according to the present invention are used for measurement of the absorption peak wavelength. In the measurement chip prepared for comparison, the surface of the silver film is coated with a compound which is prepared for comparison with the present invention. In the case corresponding to the curve (2), the antioxidant film is made of the compound (S-5), which is indicated before as an example of the mercapto compound. In the case corresponding to the curve (3), the antioxidant film is made of the compound ($B_{11}$-2), which is indicated before as an example of the reductive compound.

The above compound prepared for comparison is the compound having the following structure.

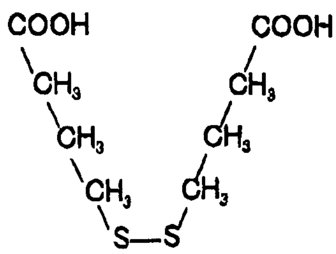

As the curve (1) in FIG. 3 shows, in the measurement chip in which the antioxidant film is formed of the compound prepared for comparison, oxidation of the surface of the silver film progresses with time, and the absorption peak wavelength greatly varies. On the other hand, as the curves (2) and (3) in FIG. 3 show, in the measurement chips in which the antioxidant films are formed of the compounds according to the present invention, variations in the absorption peak wavelengths are very small.

<u>Additional Matters</u>

The above effect of the antioxidant film according to the present invention can be achieved even when the metal film is made of any other metals including gold, copper, and aluminum. However, in the cases of sensors, it is known that the highest sensitivity is achieved when the metal film in the measurement chip is made of silver. Therefore, it is preferable that the metal film is made of silver. Since silver is particularly prone to oxidation compared with the other metals, silver has not been considered to be practicable. Nevertheless, according to the present invention, it is possible to obtain a measurement chip using silver, exhibiting high sensitivity and stable characteristics, and being suitable for use with a sensor.

In addition, the present invention is effective not only in the measurement chips for use with biosensors, and also in other optical devices having any structures and functions as far as plasmon resonance such as surface plasmon resonance or localized plasmon resonance can be excited in the optical devices. Further, the present invention can also be applied to and is also effective in still other optical devices which utilize phenomena similar to the surface plasmon resonance or localized plasmon resonance.

All of the contents of the Japanese patent application No. 2003-433809 are incorporated into this specification

by reference.

## Claims

1. An optical device having a structure which has a metallic layer (1) containing a constituent made of a metal, and enables excitation of plasmon resonance,
**characterized in** comprising
an antioxidant film (2) formed of one of a mercapto compound containing at least one of a benzene ring and a hetero ring, and a reductive compound containing a metal-binding group (4) which can be bound to said metal, in such a manner that the antioxidant film (2) covers a surface of said constituent.

2. An optical device according to claim 1, wherein said mercapto compound is one of compounds expressed by a general formula, Y'-SM, where Y' represents one of an alkyl group, an aryl group, and a heterocyclic group which have at least one of a benzene ring and a hetero ring, S represents a sulfur atom, and M represents one of a hydrogen atom, a metal atom, and ammonium.

3. An optical device according to claim 1, wherein said reductive compound is a compound chosen from hydroxylamines, hydroxamic acids, hydroxyureas, hydroxyurethanes, hydroxysemicarbazides, reductones including reductone derivatives, anilines, phenols including polyphenols, hydrazines, hydrazides, and phenidones.

4. An optical device according to either one of claims 1 to 3, wherein each of said mercapto compound and said reductive compound contains a group (6) which can be bound to a predetermined receptor (7).

5. An optical device according to either one of claims 1 to 4, wherein said metal is silver.

FIG.1

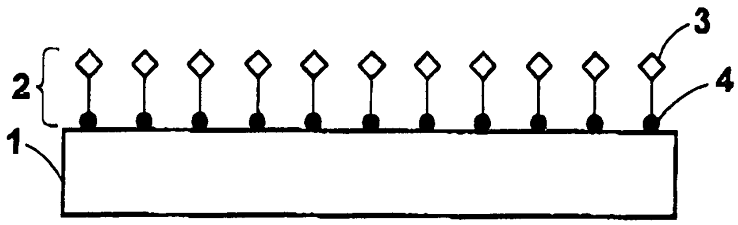


FIG.2

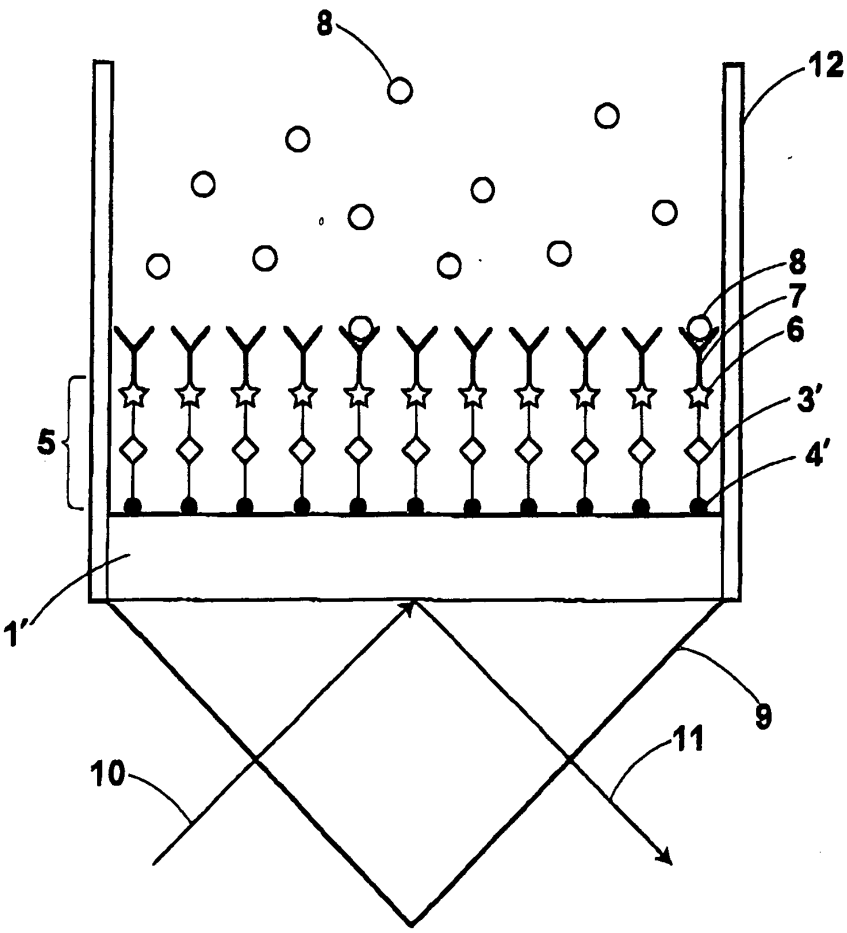

# FIG.3

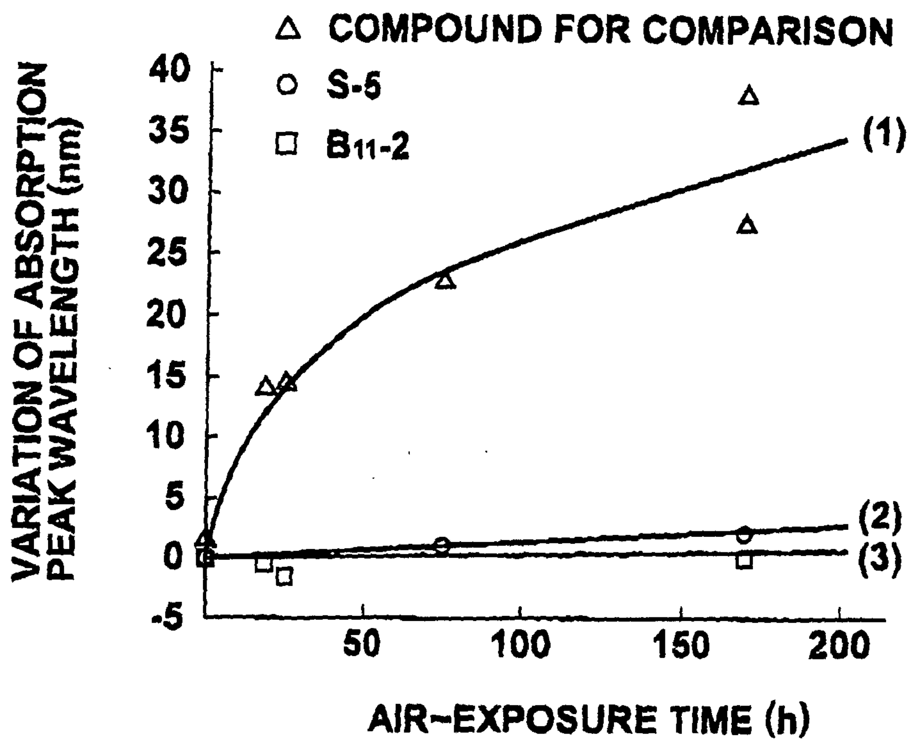
△ COMPOUND FOR COMPARISON
○ S-5
□ B11-2
VARIATION OF ABSORPTION PEAK WAVELENGTH (nm)
40
35
30
25
20
15
10
5
0
-5
50
100
150
200
AIR-EXPOSURE TIME (h)
(1)
(2)
(3)